# EUROPÄISCHE PATENTSCHRIFT

(11) **EP 4 371 619 B1**
(45) Veröffentlichungstag und Bekanntmachung des Hinweises auf die Patenterteilung: **18.06.2025**
(21) Anmeldenummer: 23189979.0
(22) Anmeldetag: 07.08.2023
(51) Int. Cl.: A62B 3/00, B60R 11/06, B25D 1/00, B60R 11/00

(54) **MITTELKONSOLE FÜR EIN FAHRZEUG**
CENTER CONSOLE FOR VEHICLE
CONSOLE CENTRALE POUR VÉHICULE

(30) Priorität: 17.11.2022 DE 102022130418
(43) Veröffentlichungstag der Anmeldung: 22.05.2024
(73) Patentinhaber: Ford Global Technologies, LLC, Dearborn, MI 48126 (US)
(72) Erfinder: Advena, Robin, 50670 Köln (DE); Ottlik, Bernd, 50259 Pulheim (DE); Hübner, Martin, 51429 Bergisch Gladbach (DE); Klausmann, Tim, 52525 Heinsberg (DE); Bisdorf, Marc, 50733 Köln (DE)
(74) Vertreter: Markowitz, Markus

(56) Entgegenhaltungen:
- CN-U- 205 239 375
- CN-U- 208 423 842
- DE-U1- 202010 000 109
- JP-B2- 5 773 778
- US-A1- 2016 038 773
- US-B2- 10 189 152

## Beschreibung

Die Erfindung betrifft eine Mittelkonsole für ein Fahrzeug, aufweisend wenigstens eine Halterung zum Halten eines Nothammers, sowie ein Fahrzeug mit einer Mittelkonsole.

Eine Mittelkonsole eines Fahrzeugs verläuft üblicherweise von einem Kniebereich zwischen zwei vorderen Fußräumen heckseitig bis zwischen zwei Vordersitze. Derartige Mittelkonsolen können sehr unterschiedlich ausgebildet sein und weisen meist wenigstens eine Funktionseinheit auf, wie beispielsweise einen Getränkehalter oder dergleichen.

Die CN 210 970 890 U offenbart eine Halterung für einen Nothammer für ein Fahrzeug, wobei die Halterung einen Aufnahmekörper zum Aufnehmen des Nothammers und einen Sensoreinheit aufweist, um das Fehlen des Nothammers in der Halterung feststellen und anzeigen zu können.

Die CN 2 05 239 375 U zeigt eine Halterung für einen Nothammer, die seitlich an einer Fahrzeug-Mittelkonsole angebracht ist.

Die DE 202 20 953 U1 offenbart eine Anordnung eines Nothammers und eines Wandhalters insbesondere zum Gebrauch in öffentlichen Verkehrsmitteln oder in öffentlichen Räumen, wobei Kupplungsmittel vorgesehen sind, um den Nothammer an den Wandhalter zu koppeln. Die Kupplungsmittel umfassen Verbindungsmittel, die die Entfernung der Kupplungsmittel oder des Nothammers nur ermöglichen, nachdem die Kupplungsmittel und/oder die Verbindungsmittel zerbrochen wurden.

Die JP 5 773 778 B2 offenbart eine Mittelkonsole für ein Fahrzeug, die eine verschließbare Kammer aufweist, in der ein Nothammer angeordnet ist, der mittels einer Halterung in der Kammer gehalten wird.

Der Erfindung liegt die Aufgabe zugrunde, einen Nothammer innerhalb eines Fahrgastraums eines Fahrzeugs lagestabil sowie frei und einfach zugänglich aufzubewahren.

Erfindungsgemäß wird die Aufgabe durch eine Mittelkonsole mit den Merkmalen des Anspruchs 1 gelöst.

Es ist darauf hinzuweisen, dass die in der nachfolgenden Beschreibung einzeln aufgeführten Merkmale sowie Maßnahmen in beliebiger technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Gemäß der Erfindung weist die Halterung eine Griffhalteeinheit mit einer nach oben offenen Ausnehmung zum zumindest teilweisen Aufnehmen eines Griffs des Nothammers und eine in Querrichtung der Mittelkonsole beabstandet von der Griffhalteeinheit angeordnete Kopfhalteeinheit mit einer nach oben offenen Ausnehmung zum zumindest teilweisen Aufnehmen eines Hammerkopfes des Nothammers auf, wobei der an der Halterung angeordnete Nothammer mittels wenigstens eines Vorspannelements in Richtung einer Ruhestellung vorgespannt ist, in der wenigstens ein sich heckseitig erstreckender Haltevorsprung der Griffhalteeinheit und/oder der Kopfhalteeinheit, der die Ausnehmung frontseitig oben teilweise verschließt, den Griff bzw. den Hammerkopf zumindest teilweise oben abdeckt. Hierdurch wird der Nothammer in seiner Ruhestellung derart von der Halterung gehalten, dass sich der Nothammer nicht selbsttätig von der Halterung lösen kann, auch nicht im Falle eines Extremereignisses. Der Nothammer kann nur derart von der Halterung gelöst werden, wenn der Nothammer zunächst gegen die Wirkung der Vorspanneinheit in Längsrichtung der Mittelkonsole heckseitig verlagert wird, so dass der Griff bzw. der Hammerkopf des Nothammers nicht mehr oben von dem Haltevorsprung abgedeckt ist. Die Vorspanneinheit kann für ihre Funktion wenigstens ein Federelement aufweisen. Die Griffhalteeinheit und/oder die Kopfhalteeinheit kann wenigstens eine Führungskontur aufweisen, mit der der Nothammer beim Anbringen an der Halterung und/oder beim Entfernen von der Halterung geführt wird, so dass das Anbringen bzw. Entfernen des Nothammers erleichtert und intuitiver gemacht wird. Die Bewegung zum Entfernen bzw. Anbringen des Nothammers kann beispielsweise eine Kombination aus einer linearen Bewegung des Nothammers und einer Rotationsbewegung des Nothammers sein.

Die Halterung ist vorzugsweise derart ausgebildet, dass der Nothammer während einer Fahrt des Fahrzeugs geräuschfrei an der Halterung angeordnet ist. Zudem ist die Halterung vorzugsweise derart ausgebildet, dass sich der Nothammer selbst im Falle eines Extremereignisses nicht selbststätig durch die auf ihn einwirkenden Trägheitskräfte von der Halterung lösen kann.

Vorzugsweise ist die Halterung derart ausgebildet, dass ein Griff eines an der Halterung angeordneten Nothammers in einer Querrichtung der Mittelkonsole verläuft. Hierdurch kann der Griff des Nothammers mit der Hand intuitiv und einfach ergriffen werden, um den Nothammer dem Aufnahmeraum entnehmen zu können. Dies ist insbesondere von Vorteil, wenn die Halterung derart ausgebildet ist, dass der Nothammer erst nach Aufbringen einer bestimmten Kraft von der Halterung gelöst werden kann.

Die erfindungsgemäße Mittelkonsole kann insbesondere in einem Fahrzeug in Form eines Kraftwagens, beispielsweise eines Personenkraftwagens oder Nutzkraftwagens, verbaut sein. Ein solches Fahrzeug stellt daher einen weiteren erfindungsgemäßen Aspekt dar. Ebenso stellt eine erfindungsgemäße Mittelkonsole zusammen mit einem daran angeordneten Nothammer einen Aspekt der Erfindung dar.

Gemäß einer vorteilhaften Ausgestaltung ist die Halterung von außen frei zugänglich in einem seitlich dauerhaft offenen Aufnahmeraum der Mittelkonsole angeordnet. Hierdurch ist der Nothammer ergonomisch in dem Aufnahmeraum bzw. der Mittelkonsole des Fahrzeugs angeordnet, also in einem Bereich des Fahrgastinnenraums, der für eine auf einem Vordersitz des Fahrzeugs sitzende Person sehr gut zugänglich ist, selbst wenn die Person mit einem Sicherheitsgurt an den Vordersitz angeschnallt ist. Da der Aufnahmeraum der Mittelkonsole dauerhaft offen ist, muss zur Zugänglichmachung des Nothammers nicht erst eine Klappe geöffnet werden, was im Übrigen im Falle eines Extremereignisses durch Verformungen von Fahrzeugkomponenten erschwert oder unmöglich gemacht sein kann, so dass im schlimmsten Fall nicht auf den Nothammer zugegriffen werden könnte. Stattdessen ist der Nothammer von außen bzw. von außerhalb der Mittelkonsole frei zugänglich in dem Aufnahmeraum angeordnet, und zwar über eine seitliche Öffnung des Aufnahmeraums, über die eine auf einem Vordersitz sitzende Person, auf deren Seite der Mittelkonsole die seitliche Öffnung angeordnet ist, in den offenen Aufnahmeraum sehen und den Nothammer erblicken kann. Die Person kann also ihre Hand zielgerichtet und somit schnell zu dem Nothammer bewegen, um den Nothammer ergreifen, dem Aufnahmeraum entnehmen und zum Einschlagen einer Scheibe des Fahrzeugs verwenden zu können. Die Mittelkonsole bzw. deren Aufnahmeraum kann auch auf beiden Seiten jeweils eine solche seitliche Öffnung aufweisen, so dass sowohl eine auf dem Fahrersitz sitzende Person, als auch eine auf dem Beifahrersitz sitzende Person nach dem Nothammer greifen kann. In jedem Fall ist der Nothammer in einer sichtbaren Position innerhalb des Aufnahmeraums der Mittelkonsole, die technische Funktion der Mittelkonsole erweiternd störungsfrei angeordnet.

Die Halterung zum Halten des Nothammers ist vorzugsweise vollständig innerhalb des Aufnahmeraums der Mittelkonsole angeordnet, so dass auch der an der Halterung angeordnete Nothammer vollständig innerhalb des Aufnahmeraums angeordnet ist.

Gemäß einer weiteren vorteilhaften Ausgestaltung ist die Halterung zumindest teilweise monolithisch mit einem den Aufnahmeraum begrenzenden Grundkörper der Mittelkonsole hergestellt. Hierdurch kann eine Montage separater Halterungsteile an der übrigen Mittelkonsole weitestgehend reduziert werden, was die Herstellung der Mittelkonsole vereinfacht und die Mittelkonsole mit der Halterung robuster macht. Alternativ ist es aber auch möglich, die Halterung vollständig separat herzustellen und an der übrigen Mittelkonsole anzubringen, beispielsweise mittels mechanischer Befestigungsmittel.

Gemäß einer weiteren vorteilhaften Ausgestaltung ist die Halterung in einem frontseitigen Endbereich des über seitliche Öffnungen zugänglichen Aufnahmeraums der Mittelkonsole angeordnet. Eine auf einem Vordersitz des Fahrzeugs sitzende Person kann diesen frontseitigen Bereich des Aufnahmeraums direkt einsehen, was das Ergreifen des Nothammers vereinfacht.

Weitere vorteilhafte Ausgestaltungen der Erfindung sind in den Unteransprüchen und der folgenden Figurenbeschreibung offenbart. Es zeigt:
- Fig. 1: eine schematische und perspektivische Darstellung eines Ausführungsbeispiels für eine erfindungsgemäße Mittelkonsole;
- Fig. 2: eine schematische und perspektivische Darstellung des in Fig. 1 gezeigten Nothammers;
- Fig. 3a-c: schematische Schnittdarstellungen der in Fig. 1 gezeigten Mittelkonsole mit verschiedenen Stellungen des Nothammers;
- Fig. 4a-c: eine perspektivische Darstellung des Nothammers in dem Aufnahmeraum der Mittelkonsole mit Schnitt durch die Griffhalteeinheit wie zu den Figuren 3a bis c;
- Fig. 5a-c: eine perspektivische Darstellung des Nothammers in dem Aufnahmeraum der Mittelkonsole mit Schnitt durch die Kopfhalteeinheit korrelierend zu den Figuren 3a bis c;
- Fig. 6: eine vergrößerte Schnittdarstellung gemäß Figur 3a; und
- Fig. 7: eine vergrößerte Schnittdarstellung gemäß Figur 5a

In den unterschiedlichen Figuren sind gleiche Teile stets mit denselben Bezugszeichen versehen, weswegen diese in der Regel auch nur einmal beschrieben werden.

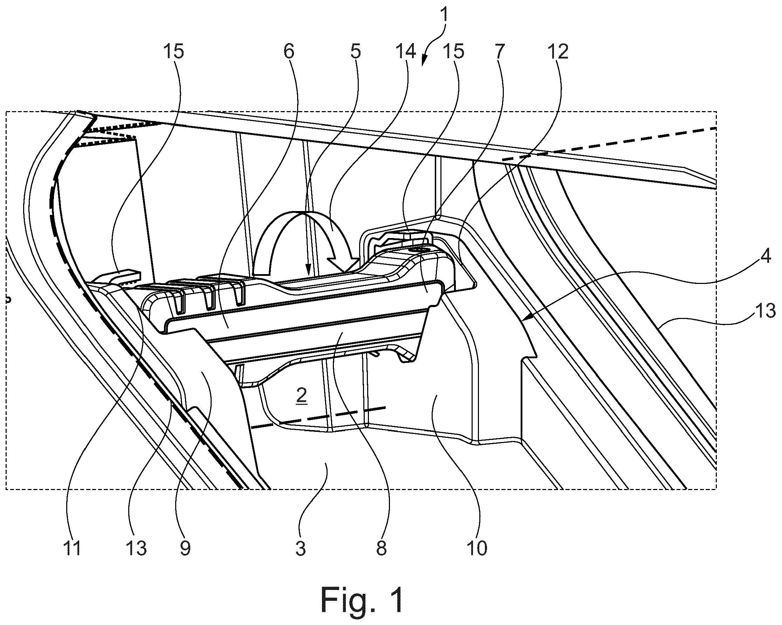

Fig. 1 zeigt eine schematische und perspektivische Darstellung eines Ausführungsbeispiels für eine erfindungsgemäße Mittelkonsole 1 für ein nicht gezeigtes Fahrzeug.

Die Mittelkonsole 1 weist einen beidseitig seitlich dauerhaft offenen Aufnahmeraum 2 auf, der innerhalb eines Grundkörpers 3 der Mittelkonsole 1 angeordnet ist, an dem an jeder Seite eine seitliche Öffnung 13 ausgebildet ist, über die der Aufnahmeraum 2 seitlich dauerhaft offen ist.

Zudem weist die Mittelkonsole 1 eine Halterung 4 zum Halten eines Nothammers 5 auf, der von außen sichtbar und frei zugänglich in dem Aufnahmeraum 2 der Mittelkonsole 1 angeordnet ist. Insbesondere ist die Halterung 4 in einem frontseitigen Endbereich des über die seitlichen Öffnungen 13 zugänglichen Aufnahmeraums 2 der Mittelkonsole 1 angeordnet ist. Dabei ist die Halterung 4 derart ausgebildet, dass ein Griff 6 des an der Halterung 4 angeordneten Nothammers 5 in einer Querrichtung der Mittelkonsole 1 verläuft.

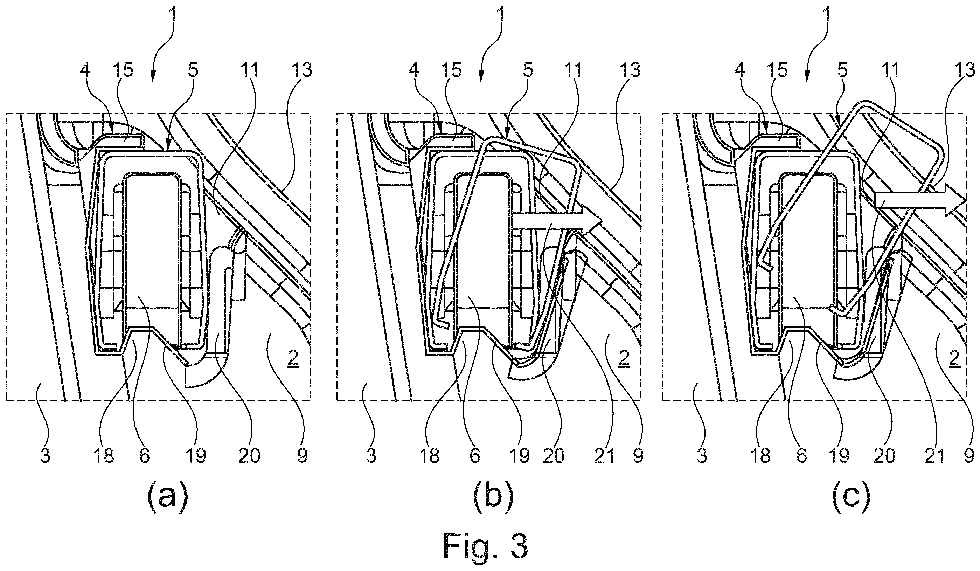

Der Nothammer 5 weist zudem einen Hammerkopf 7 auf, der gegen eine Scheibe des Fahrzeugs geschlagen werden kann, um diese bei Bedarf einzuschlagen. Zwischen dem Hammerkopf 7 und dem Griff 6 weist der Nothammer 5 einen verjüngten Übergangsabschnitt 8 auf. Der verjüngte Übergangsabschnitt 8 ist auch vorteilhaft hinsichtlich eines erleichterten Greifens bei dem Lösen, was zu den Figuren 3a bis 3c noch beschrieben wird.

Die Halterung 4 weist eine Griffhalteeinheit 9 und eine in der Querrichtung der Mittelkonsole 1 beabstandet von der Griffhalteeinheit 9 angeordnete Kopfhalteeinheit 10 auf. Die Griffhalteeinheit 9 weist eine bezüglich einer Höhenrichtung der Mittelkonsole 1 nach oben und in Richtung der Kopfhalteeinheit 10 offene Ausnehmung 11 zum zumindest teilweisen Aufnehmen des Griffs 6 auf, in die der Griff 6 teilweise eingefügt ist. Die Kopfhalteeinheit 10 weist eine bezüglich der Höhenrichtung der Mittelkonsole 1 nach oben und in Richtung der Griffhalteeinheit 9 offene Ausnehmung 12 zum zumindest teilweisen Aufnehmen des Hammerkopfes 7 auf, in die der Hammerkopf 7 teilweise eingefügt ist. Die Griffhalteeinheit 9 und die Kopfhalteeinheit 10 sind zumindest teilweise monolithisch mit dem, den Aufnahmeraum 2 begrenzenden Grundkörper 3 der Mittelkonsole 1 hergestellt.

An der Griffhalteeinheit 9 und der Kopfhalteeinheit 10 ist jeweils ein starr ausgebildeter, sich heckseitig erstreckender Haltevorsprung 15 ausgebildet, der die jeweilige Ausnehmung 11 bzw. 12 frontseitig teilweise verschließt und dadurch den Griff 6 bzw. den Hammerkopf 7 in der gezeigten Ruhestellung des Nothammers 5 oben teilweise umgreift bzw. abdeckt. Hierdurch kann der Nothammer 5 nicht vertikal nach oben aus den Ausnehmungen 11 und 12 herausbewegt werden, um den Nothammer 5 von der Mittelkonsole zu lösen. Stattdessen kann der Nothammer 5 nur durch eine Drehbewegung entsprechend dem gezeigten Pfeil 14 von der Mittelkonsole 1 gelöst werden, wie es nachfolgend mit Bezug auf die Fign. 3a bis 3c beschrieben ist. Die Halterung 4 weist wenigstens ein in den Fign. 3a bis 3c gezeigtes Vorspannelement 20 auf, mit dem der Nothammer 5 in Richtung der Ruhestellung vorgespannt ist.

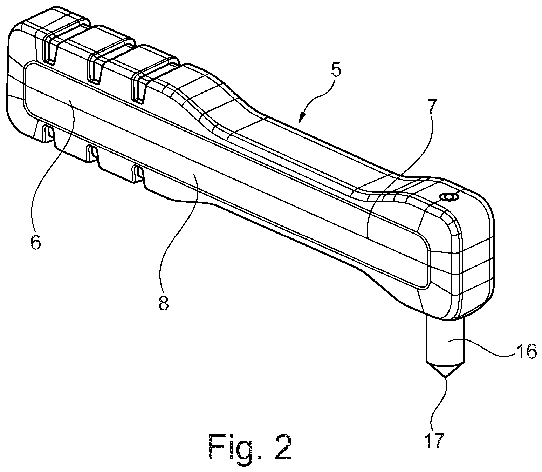

Fig. 2 zeigt eine schematische und perspektivische Darstellung des in Fig. 1 gezeigten Nothammers 5. Es sind insbesondere der Griff 6 und der Hammerkopf 7 vollständig gezeigt. Der Hammerkopf 7 weist ein zylinderförmiges Einschlagelement 16 auf, das in den übrigen Hammerkopf 7 eingegossen ist, wobei der Nothammer 5 im Übrigen aus einem Kunststoff hergestellt sein kann. Das Einschlagelement 16 weist eine in Kontakt mit einer einzuschlagenden Scheibe bringbare kegelförmige Schlagspitze 17 auf. Die Kopfhalteeinheit 10 im speziellen für den Hammerkopf 7 mit Schlagspitze 17 ist bevorzugt so ausgeformt, das für eine wie zu den Figuren 3a bis 3c beschriebene Rotationsbewegung entsprechender Freiraum existiert.

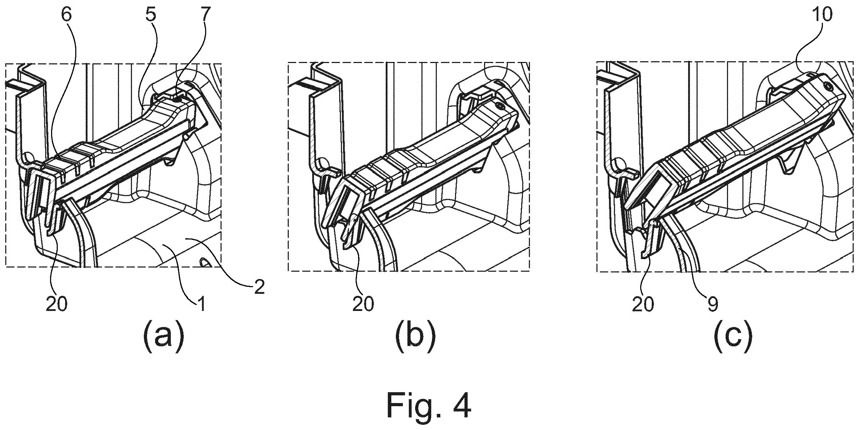

Die Figuren 3a-c zeigen schematische Schnittdarstellungen der in Fig. 1 gezeigten Mittelkonsole 1 mit verschiedenen Stellungen des Nothammers 5. Die Schnittdarstellungen zeigen Längsschnitte der Mittelkonsole 1 im Bereich der Griffhalteeinheit 9. **In** den Figuren 4a bis c ist eine perspektivische Darstellung des Nothammers 5 in dem Aufnahmeraum 2 der Mittelkonsole 1 mit Schnitt durch die Griffhalteeinheit 9 gezeigt, wobei die Darstellung der Figuren 3a bis c mit den Figuren 4a bis c einander korrelieren.

Wie in Figur 3a und 4a zu erkennen ist, ist an einem Boden der Ausnehmung 11 ein sich in Querrichtung der Mittelkonsole 1 erstreckender Griffhaltevorsprung 18 angeordnet, der in eine sich in Längsrichtung des Nothammers 5 an dessen Griff 7 erstreckende Halteausnehmung 19 eingreift. Hierdurch wird der Griff 7 in Längsrichtung der Mittelkonsole 1 an der Griffhalteeinheit 9 gesichert. Dabei verhindert der Haltevorsprung 15, dass der Griff 6 selbsttätig von dem Griffhaltevorsprung 18 abhebt.

In der Ausnehmung 11 ist zudem ein im Querschnitt L-förmig ausgebildetes Vorspannelement 20 angeordnet, mit dem der Griff 6 in die in Fig. 3a und Fig. 4a gezeigte Stellung vorgespannt ist, so dass sich der Griff 7 und dadurch auch nicht der Nothammer 5 insgesamt entsprechend dem in Fig. 1 gezeigten Pfeil relativ zu der Mittelkonsole 1 drehen und sich somit während der Fahrt des Fahrzeugs oder eines Extremereignisses nicht selbsttätig von der Mittelkonsole 1 lösen kann.

In Fig. 3b und 4b ist der Griff 6 bereits entsprechend dem Pfeil 21 um den Griffhaltevorsprung 18 verschwenkt worden, wodurch der Haltevorsprung 15 den Griff 6 nicht mehr oben abdeckt, der Griff 6 also von dem Haltevorsprung 15 gelöst ist. Dabei ist das Vorspannelement 20 gegen seine Vorspannwirkungsrichtung elastisch verformt worden. Ab dieser Stellung des Griffs 6 bzw. Nothammers 5 relativ zu der Mittelkonsole 1 kann der Griff 6 bzw. der Nothammer 5 nach schräg oben und heckseitig aus der Ausnehmung 11 herausbewegt werden, was einem Nutzer eine intuitive Handhabung des Nothammers 5 ermöglicht. Diese Position ist in Figur 3c und 4c dargestellt.

Der Bewegungsablauf ist insbesondere von Vorteil, wenn die Entnahme des Nothammers 5 aus dem Aufnahmeraum 2 blind, also ohne Hinsehen durchgeführt wird. Ist der Nothammer 5 der Ausnehmung 11 entnommen worden, verformt sich das Vorspannelement 20 selbsttätig wieder in den in Figur 3a gezeigten Zustand. Das Anordnen des Nothammers 5 an der Ausnehmung 11 erfolgt dann durch eine Umkehrung der vorbeschriebenen Schritte.

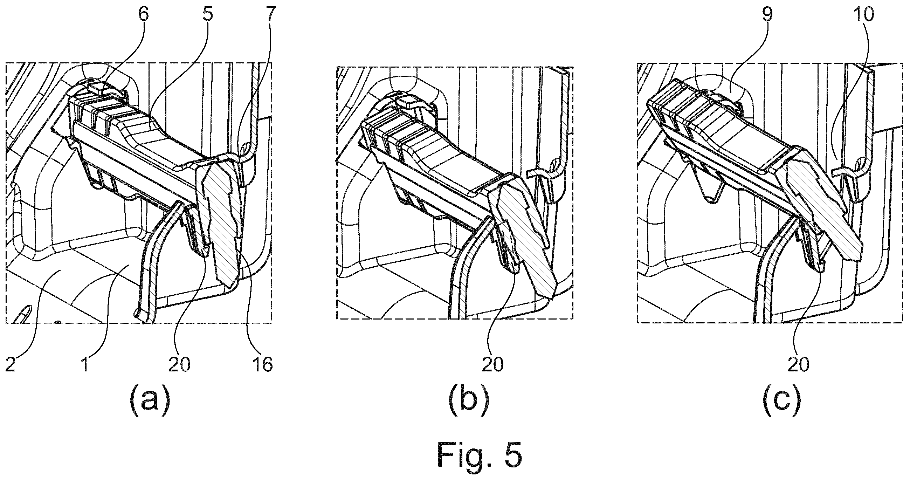

In den Figuren 5a bis c eine perspektivische Darstellung des Nothammers 5 in dem Aufnahmeraum 2 der Mittelkonsole 1 mit Schnitt durch die Kopfhalteeinheit 10 sowie den Hammerkopf 7 mit Einschlagelement 16 dargestellt, wobei der Bewegungsablauf mit den Figuren 3 bis c korreliert.

Wie in Figur 5a zu erkennen ist, ist die Ausnehmung 12 bodenseitig geöffnet, so dass der Hammerkopf 7, insbesondere dessen Einschlagelement 1 mit Schlagspitze 17 aufnehmbar ist. Der Hammerkopf 7 ist in der Ausnehmung 12 arretiert und mittels des Haltevorsprungs 15 lagesicher gehalten. Auch das Vorspannelement 20 ist erkennbar. Der Hammerkopf 7 mit seinem Einschlagelement 16 kann frei, also ohne Behinderung rotieren, da die Kopfhalteeinheit 10 genügend Freiraum bietet, wie in Figur 4b und 4c am besten erkennbar ist. Der Bewegungsablauf ist wie zu den Figuren 3a bis c beschrieben, worauf Bezug genommen wird.

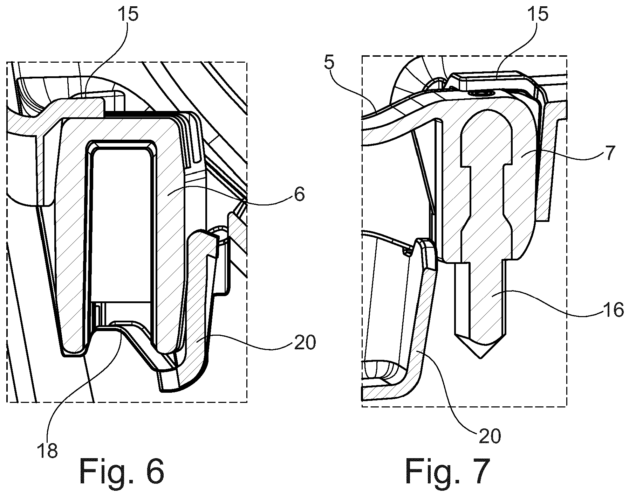

In Figur 6 ist eine Vergrößerung der Schnittdarstellung aus Figur 3a gezeigt. Das Vorspannelement 20 liegt einseitig an dem Griff 6 an, und drückt den Nothammer 5, also den Griff 6 an dazu gegenüberliegenden Anlagepunkte der Griffhalteeinheit 9 an, so dass der Nothammer 5 zusammen mit dem Haltevorsprung 15 lagesicher gehalten ist.

In Figur 7 ist eine Vergrößerung der Schnittdarstellung aus Figur 5a gezeigt. Das Vorspannelement 20 liegt einseitig an dem Hammerkopf 7 an, und sorgt so zusammen mit dem Haltevorsprung 15 dafür, dass der Nothammer 5 auch kopfseitig lagesicher gehalten ist.

### Bezugszeichenliste

- 1: Mittelkonsole
- 2: Aufnahmeraum
- 3: Grundkörper
- 4: Halterung
- 5: Nothammer
- 6: Griff
- 7: Hammerkopf
- 8: Übergangsabschnitt
- 9: Griffhalteeinheit
- 10: Kopfhalteeinheit
- 11: Ausnehmung an 9
- 12: Ausnehmung an 10
- 13: seitliche Öffnung an 3
- 14: Pfeil
- 15: Haltevorsprung
- 16: Einschlagelement
- 17: Schlagspitze
- 18: Griffhaltevorsprung
- 19: Halteausnehmung
- 20: Vorspannelement
- 21: Pfeil

## Patentansprüche

1. Mittelkonsole (1) für ein Fahrzeug, aufweisend wenigstens eine Halterung (4) zum Halten eines Nothammers (5),
**dadurch gekennzeichnet, dass**
die Halterung (4) eine Griffhalteeinheit (9) mit einer nach oben offenen Ausnehmung (11) zum zumindest teilweisen Aufnehmen eines Griffs (6) des Nothammers (5) und eine in Querrichtung der Mittelkonsole (1) beabstandet von der Griffhalteeinheit (9) angeordnete Kopfhalteeinheit (10) mit einer nach oben offenen Ausnehmung (12) zum zumindest teilweisen Aufnehmen eines Hammerkopfes (7) des Nothammers (5) aufweist, wobei der an der Halterung (4) angeordnete Nothammer (5) mittels wenigstens eines Vorspannelements (20) in Richtung einer Ruhestellung vorgespannt ist, in der wenigstens ein sich heckseitig erstreckender Haltevorsprung (15) der Griffhalteeinheit (9) und/oder der Kopfhalteeinheit (10), der die Ausnehmung (11) bzw. die Ausnehmung (12) frontseitig oben teilweise verschließt, den Griff (6) bzw. den Hammerkopf (7) zumindest teilweise oben abdeckt..

2. Mittelkonsole (1) nach Anspruch 1,
**dadurch gekennzeichnet, dass**
die Halterung (4) von außen frei zugänglich in einem seitlich dauerhaft offenen Aufnahmeraum (2) der Mittelkonsole (1) angeordnet ist.

3. Mittelkonsole (1) nach Anspruch 1 oder 2,
**dadurch gekennzeichnet, dass**
die Halterung (4) zumindest teilweise monolithisch mit einem den Aufnahmeraum (2) begrenzenden Grundkörper (3) der Mittelkonsole (1) hergestellt ist.

4. Mittelkonsole (1) nach einem der vorhergehenden Ansprüche,
**dadurch gekennzeichnet, dass**
die Halterung (4) in einem frontseitigen Endbereich des über seitliche Öffnungen (13) zugänglichen Aufnahmeraums (2) der Mittelkonsole (1) angeordnet ist.

5. Fahrzeug mit einer Mittelkonsole (1) nach einem der vorhergehenden Ansprüche.

## Claims

1. Centre console (1) for a vehicle, having at least one holder (4) for holding an emergency hammer (5),
**characterized in that**
the holder (4) has a handle-holding unit (9) with an upwardly open recess (11) for at least partially receiving a handle (6) of the emergency hammer (5) and a head-holding unit (10) arranged in the transverse direction of the centre console (1) at a distance from the handle-holding unit (9) with an upwardly open recess (12) for at least partially receiving a hammer head (7) of the emergency hammer (5), wherein the emergency hammer (5) arranged on the holder (4) is preloaded by means of at least one preloading element (20) in the direction of an inoperative position, in which at least one holding projection (15) of the handle-holding unit (9) and/or of the head-holding unit (10) extending on the rear side and partially closing the recess (11) or the recess (12) on the front side at the top at least partially upwardly covers the handle (6) or the hammer head (7).

2. Centre console (1) according to Claim 1,
**characterized in that**
the holder (4) is freely accessible from the outside in a laterally permanently open receiving chamber (2) in the centre console (1).

3. Centre console (1) according to Claim 1 or 2,
**characterized in that**
the holder (4) is at least partially produced monolithically with a main body (3) of the centre console (1), the main body delimiting the receiving chamber (2).

4. Centre console (1) according to one of the preceding claims,
**characterized in that**
the holder (4) is arranged in a front-side end region of the receiving chamber (2) of the centre console (1), said receiving chamber being accessible via lateral openings (13).

5. Vehicle having a centre console (1) according to one of the preceding claims.

## Revendications

1. Console centrale (1) pour un véhicule, comprenant au moins un support (4) pour maintenir un marteau de secours (5),
**caractérisée en ce que**
le support (4) comprend une unité (9) de maintien de poignée avec un évidement (11) ouvert vers le haut pour recevoir au moins partiellement une poignée (6) du marteau de secours (5) et une unité (10) de maintien de tête agencée dans la direction transversale de la console centrale (1) à distance de l'unité (9) de maintien de poignée, avec un évidement (12) ouvert vers le haut pour recevoir au moins partiellement une tête (7) du marteau de secours (5), le marteau de secours (5), agencé sur le support (4), étant maintenu par au moins un élément de précontrainte (20) dans la direction d'une position de repos, dans laquelle au moins une saillie de retenue (15) s'étendant vers l'arrière de l'unité (9) de maintien de poignée et/ou de l'unité (10) de maintien de tête, qui ferme partiellement l'évidement (11) ou l'évidement (12) du côté de l'avant en partie supérieure, recouvre au moins partiellement la poignée (6) ou la tête de marteau (7) dans la partie supérieure.

2. Console centrale (1) selon la revendication 1,
**caractérisée en ce que**
le support (4) est agencé de manière librement accessible depuis l'extérieur dans un espace de réception (2) de la console centrale (1) ouvert latéralement de manière permanente.

3. Console centrale (1) selon la revendication 1 ou la revendication 2,
**caractérisée en ce que**
le support (4) est fabriqué au moins en partie monolithique, avec un corps de base (3) de la console centrale (1) délimitant l'espace de réception (2).

4. Console centrale (1) selon l'une des revendications précédentes,
**caractérisée en ce que**
le support (4) est agencé dans une zone d'extrémité avant de l'espace de réception (2) de la console centrale (1) accessible par des ouvertures latérales (13).

5. Véhicule comprenant une console centrale (1) selon l'une des revendications précédentes.
